# EUROPEAN PATENT APPLICATION

(11) **EP 4 803 167 A1**
(43) Date of publication of application: **09.09.2026**
(21) Application number: 26155424.0
(22) Date of filing: 30.01.2026
(51) Int. Cl.: A63F 13/352

(54) **GAME SYSTEM, METHOD FOR DISTRIBUTED DATA PROCESSING, AND PROGRAM FOR DISTRIBUTED DATA PROCESSING**

(30) Priority: 04.03.2025 JP 2025033700
(71) Applicant: SNK Corporation, Osaka-shi, Osaka 5320003 (JP)
(72) Inventor: TERAI, Takatoshi, OSAKA-SHI, OSAKA (JP); HASHIMOTO, Atsushi, OSAKA-SHI, OSAKA (JP)
(74) Representative: Algemeen Octrooi- en Merkenbureau B.V.

(57) **Abstract**

A game system (1) for a multiplayer game in which a considerable number of players participate, where the game system (1) includes: a plurality of game servers (300) running a server program that performs game processing. Each of the game servers (300) includes: an acceptance unit (10) that accepts, from among a plurality of player terminals (100) of the players, an operation on a character operated by a player from a player terminal (100) connected to its own server; a processor (20) that performs game processing for the operation; an inter-server communication unit (30) that synchronizes with other game servers (300) among the game servers (300); and a controller (40) that performs processing of a character of the player connected to its own server, receives information of a character of a player connected to another server, and causes a player terminal (100) connected to its own server and a player terminal (100) connected to the other server to display the character of the player connected to the other server.

## Description

### BACKGROUND OF THE INVENTION

### 1. Field of the Invention

This invention relates to a game system, a method for distributed data processing, and a program for distributed data processing. More specifically, it relates to an online game in a server-client model over a network.

### 2. Description of Related Art

In online competitive games using network communication (such as battle royale, team battle, sports, or racing games), multiple clients (player terminals) are connected to a single server, and movements and action information of each player are synchronized with other players through the communication via the server, thereby embodying multiplayer simultaneous play among players connected to the server conventionally. In the example represented by large-scale online role-playing games (RPGs), a vast map is divided into areas and individual servers are assigned to each area, thereby distributing a considerable number of players to each area. If players wish to play with players in other areas, they can move from one area to another and gather in the same area, thereby providing an opportunity to interact with more players. Crowded areas may also have multiple servers, thereby providing parallel worlds (commonly called channels) in the same area to distribute the players.

Japanese Laid-Open Patent Publication No. 2007-98162 discloses a network game system in which a plurality of characters including a plurality of player characters manipulated in correspondence to information input by players each operating one of a plurality of client devices connected to a server apparatus via a network and a plurality of computer characters whose actions are automatically manipulated. The client devices each comprise: a storage unit for storing character information including position information indicating the positions of the plurality of characters, and registering computer characters to be managed at the subject client device among the computer characters as relegated characters; an arithmetic operation unit for obtaining through arithmetic calculation updated character information indicating the extent of change occurring in the position of a relegated character and the extent of change occurring in the motion of the relegated character in correspondence to each of the relegated characters by using the character information stored at the storage unit as the game progresses; and a communication unit for transmitting the updated character information corresponding to each relegated character having been obtained through the arithmetic calculation to the server apparatus as a character information packet. The server apparatus receives the transmitted character information packet and transmits the received character information packet to other client devices participating in the game; and the other client devices receive the transmitted character information packet and stores the updated character information based upon the received character information.

In addition, Japanese Laid-Open Patent Publication No. 2007-528762 discloses a distributed data processing method by an online game server. The method includes the steps of: maintaining a zone information database for storing game map data that is divided into at least one game zone; allocating zone servers for implementing instruction processing with respect to a player character, to each of the game zones; mapping an indication area indicated on a predetermined display means, on the game map data, and identifying a game zone at which the mapped indication area is located; and connecting a predetermined client to a zone server that is allocated to the identified game zone. The step of connecting a predetermined client to a zone server that is allocated to the identified game zone includes the steps of: connecting the client to a first zone server of a first game zone at which a predetermined player character is located; defining a section of the first game zone as a buffer sector, based on a boundary with a second game zone, where the second game zone is adjacent to the first game zone; and in case that the indication area includes at least one section of the buffer sector, connecting the client to the second zone server.

Further, Japanese Laid-Open Patent Publication No. 2004-097548 discloses game information for enabling a computer-like apparatus including communication means for performing data communication with various servers via a communication line to function as: an account processing means for accessing an account server to perform account processing; a network game executing means that, when the account processing is performed by the account processing means, automatically accesses a first game server to execute a first network game, and that, when an access status between the account processing means and the account server satisfies an access failure condition, automatically accesses a second game server to execute a second network game.

In competitive games where game processings are performed on a single server, the number of players that can play simultaneously is limited by the performance of the game server machine. For example, in battle royal games, the maximum number of participants in a single play is often around 60 to 120. The reason for this is that the computation of interaction processing such as collisions and attacks between players and the amount of communication processing between server and client increases in proportion to the number of players, and thus the number of players that can be processed by one server is physically limited. If the number of players exceeds this limit, network delays and disconnections will occur, and the real-time nature of the game will be compromised. In addition, in area-divided server configurations such as online RPGs, players are not capable of recognizing appearance with each other or engaging in interaction such as attacks between different areas or different channels, rendering cooperation or competition impossible. To increase the number of players that can be processed by a single server, game processing such as movement, attacks, collision determinations and damage computations are not performed on the server but on the client (e.g., P2P games). However, the game processing is performed on the terminal of the player, thereby facilitating hacking (cheating) the game processing. To prevent cheat damages, important and heavy load processes such as collision detection need to be performed on the server, and as a result, the number of players that can participate simultaneously depends on the processing power of the server. As a result, conventional large-number-player games that are resistant to cheating (i.e., highly tamper-resistant) and exceed the size of about 100 players (for example, those on the order of one thousand players, although not limited thereto) have problems in that they are physically unfeasible with conventional technology. Even when multiple game servers are used to process games, for example, in the case of JP 2004-097548 A above, the area (game zone) of which each server is in charge need to overlap with the adjacent area to some extent, increasing the capacity needed by the server or the number of needed servers.

### SUMMARY OF THE INVENTION

In view of the above, the present invention has been made in view of the above circumstances, and provides a game system, a method for distributed data processing, and a program for distributed data processing that enable a greater number of players to participate simultaneously with tamper resistance and real-time performance of the game being maintained in comparison to conventional online games, allowing interaction between players connected to different servers, which has been impossible in conventional online games having an area-divided server configuration.

That is, a game system according to the first aspect is directed to a game system for a multiplayer game in which a considerable number of players participate, where the game system includes: a plurality of game servers running a server program that performs game processing, wherein each of the game servers includes: an acceptance unit that accepts, from among a plurality of player terminals of the players, an operation on a character operated by a player from a player terminal connected to its own server; a processor that performs game processing for the operation; an inter-server communication unit that synchronizes with other game servers among the game servers; and a controller that performs processing of a character of the player connected to its own server, receives information of a character of a player connected to another server, and causes a player terminal connected to its own server and a player terminal connected to the other server to display the character of the player connected to the other server.

The second aspect is that, in the game system according to the first aspect, the inter-server communication unit may receive, from the other server, location information and operation information of the character of the player connected to the other server in a game area via a relay server, and display a virtual character that represents the character of the player connected to the other server at a location indicated by the location information.

The third aspect is that, in the game system according to the first aspect, the inter-server communication unit may transmit, with respect to the character of the player connected to its own server, location information and movement information in the game area of the character via the relay server.

The fourth aspect is that, in the game system according to the first aspect, the movement information may include information on attack, defense, movement, and damage.

The fifth aspect is that the game system according to the first aspect may further include a parent game server that relays information between the game servers as children, manages a group of the game servers as children, and is in charge of game progress management and specific system processing independent of a content of play of each player.

A method for distributed data processing according to the sixth aspect is directed to a method for distributed data processing for a multiplayer game in which a considerable number of players participate, where the method causes a plurality of game servers each running a server program that performs game processing to execute the steps of: an accepting step of accepting, from among a plurality of player terminals of the players, an operation on a character operated by a player from a player terminal connected to its own server; a processing step of performing game processing for the operation; an inter-server communicating step of synchronizing with other game servers among the game servers; and a controlling step of performing processing of a character of the player connected to its own server, receiving information of a character of a player connected to another server, and causing a player terminal connected to its own server and a player terminal connected to the other server to display the character of the player connected to the other server.

A program for distributed data processing according to the seventh aspect is directed to a program for distributed data processing for a multiplayer game in which a considerable number of players participate, where the program causes a plurality of game servers each running a server program that performs game processing to embody: an accepting function that accepts, from among a plurality of player terminals of the players, an operation on a character operated by a player from a player terminal connected to its own server; a processing function that performs game processing for the operation; an inter-server communicating function that synchronizes with other game servers among the game servers; and a controlling function that is in charge of a same game area as a part of a game area, and performs processing of a character of the player connected to its own server, receives information of a character of a player connected to another server, and causes a player terminal connected to its own server and a player terminal connected to the other server to display the character of the player connected to the other server.

The game system, method for distributed data processing, and program for distributed data processing according to the present invention enable a greater number of players to participate simultaneously with tamper resistance and real-time performance of the game being maintained in comparison to conventional online games, allowing interaction between players connected to different servers, which has been impossible in conventional online games having an area-divided server configuration.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 shows a schematic diagram illustrating an example of a configuration of a game system according to a present embodiment,
FIG. 2 shows a diagram illustrating a relationship among multiple game servers, a relay server and player terminals in the game system according to the present embodiment,
FIG. 3 shows a block diagram illustrating a state where a group of game servers in the game system according to the present embodiment are connected via inter-server communication,
FIG. 4 shows a block diagram illustrating functions of each game server in the game system according to the present embodiment,
FIG. 5 shows a block diagram illustrating functions of the relay server in the game system according to the present embodiment,
FIG. 6 shows a sequence diagram illustrating a relationship among the game servers and the relay server in the game system according to the present embodiment,
FIG. 7 shows an example of a flowchart illustrating processing of a game server for a method for distributed data processing according to the present embodiment, and
FIG. 8 shows a flowchart illustrating details of a controlling step of the processing of the game server for the method for distributed data processing according to the present embodiment; and
FIG. 9 shows a flowchart illustrating processing of a relay server of the method for distributed data processing according to the present embodiment.

### DETAILED DESCRIPTION OF EMBODIMENTS

A game system 1, method for distributed data processing, and program for distributed data processing according to the present embodiment cause servers to handle critical game processing to enable a greater number of players to participate simultaneously with tamper resistance and real-time performance being maintained in comparison to conventional online games, allowing interaction between players connected to different servers, which has been impossible in conventional online games having an area-divided server configuration.

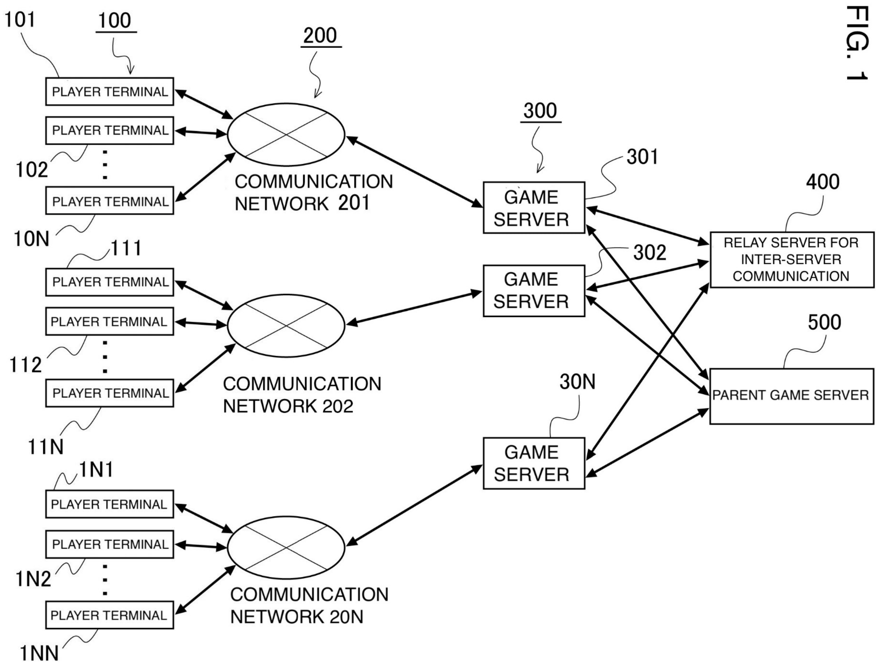

With reference to FIG. 1, a configuration of the game system 1 according to a present embodiment will be described. FIG. 1 shows a schematic diagram illustrating an example of the configuration of the game system 1 according to the present embodiment.

The game system 1 according to the present embodiment is configured such that the game provided by the game system 1 is executable on an information terminal as a player terminal (which may be, but is not limited to, a personal computer, tablet terminal, smartphone, or dedicated game machine), where the information terminal of each of multiple players is connected to the corresponding game server 300 via a communication network 200, allowing the players to play the game simultaneously. Here, each of the game servers 300 and the information terminal owned by each player are connected via the communication network 200, for example, to enable bidirectional communication. Further, the game system 1 may correspond to a server-client game system. The game servers according to the present embodiment are configured such that a relay server 400 for inter-server communication is connected to each of the game servers 300 in a bidirectionally communicationable manner, and is also connected to a parent game server 500 that manages the game servers 300 in a bidirectionally communicationable manner. As shown in FIG. 1, the game system 1 includes player terminals 100, the communication network 200, the game servers 300, and the relay server 400 for inter-server communication, and the parent game server 500. A plurality of player terminals such as 101 to 10N form a group, and each player terminal 101 to 10N in the group is connected to one communication network 201 and transmits and receives information to and from the communication network 201. The communication network 201 is connected to the game server 301 and transmits and receives information to and from the game server 301. The game server 301 is connected to the relay server 400 for inter-server communication and transmits and receives information to and from the relay server 400 for inter-server communication. The game server 301 is also connected to the parent game server 500 and transmits and receives information to and from the parent game server 500. In the same manner, a plurality of player terminals 111 to 11N form a group, and each player terminal 111 to 11N in the group is connected to one communication network 202 and transmits and receives information to and from the communication network 202. The communication network 202 is connected to the game server 302 and transmits and receives information to and from the game server 302. The game server 302 is connected to the relay server 400 for inter-server communication and transmits and receives information to and from the relay server 400 for inter-server communication. The game server 302 is also connected to the parent game server 500 and transmits and receives information to and from the parent game server 500. Each group of a plurality of player terminals 1N1 to 1NN is connected to the corresponding communication network 20N and transmits and receives information to and from the communication network 20N. The communication network 20N is connected to the corresponding game server 30N and transmits and receives information to and from the game server 30N. The game server 30N is connected to the relay server 400 for inter-server communication and transmits and receives information to and from the relay server 400 for inter-server communication. The game server 30N is also connected to the parent game server 500 and transmits and receives information to and from the parent game server 500. The communication networks 201 to 20N may correspond to common networks or networks that are connected to each other.

The parent game server 500 may relay information between child game servers and manage a group of the child game servers. In addition, the parent game server 500 may be in charge of managing the progress of the game and handling processing of certain systems that are not dependent on what each player is playing. Specifically, the processing may correspond to, for example, high-speed processing of game logic determination, collision determination, physics computation (e.g., object shaking and falling), and user input; or, for example, graphics processing of games, especially rendering complex scenes and embodying game play at high resolution; or a process such as deck organization or character growth.

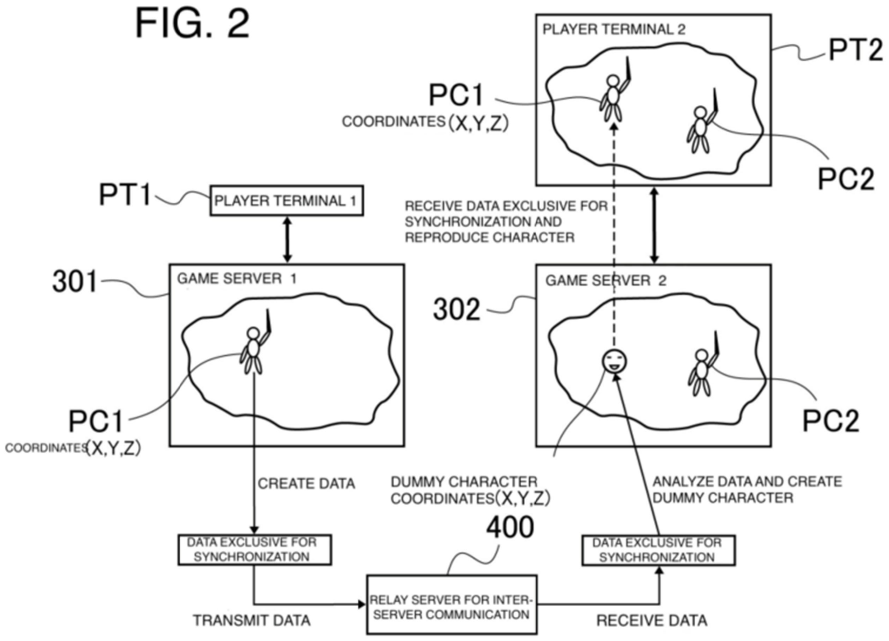

With reference to FIG. 2, the relationship among the game servers 300, relay server 400 and player terminals 100 in the game system 1 according to the present embodiment will be described. FIG. 2 shows a diagram illustrating a relationship among plural game servers 300, the relay server 400, and player terminals 100 in the game system 1 according to the present embodiment. Both game server 1_301 and game server 2_302 are in charge of the same area of the game. The game server 1_301 and game server 2_302 process the player characters of the player terminals connected to game server 1_301 and game server 2_302, respectively. The game server 1_301 and game server 2_302 are synchronized with each other. The synchronization refers to a function that allows two or more different terminals to maintain a specified file or folder in the same state, and a function that allows player characters corresponding to multiple terminals simultaneously connected to game server 1_301 and game server 2_302 to exist and operate simultaneously with each other in a game. FIG. 2 shows an overview of the characters managed on one game server, which are also reflected on the player terminals connected to another game server according to the present embodiment. For example, the game system 1 is executed in the playfield as a virtual space, and the shape and size of this playfield is common to all the game servers 300. The player character is capable of, in principle, moving freely to any desired location in the playfield according to the instructions of the player except in non-moveable areas of the playfield (e.g., walls, rocks, and holes in the playfield). As an example of the flow of data, when the player character 1 operated by the player terminal 1 (PT1) connected to the game server 1_301 is in the playfield, the game server 1_301 creates data dedicated to synchronization of the player character 1 (PC1) and transmits it to the game server 2_302 via the relay server for inter-server communication. The game server 2_302 reads the character ID and coordinates from the data dedicated to synchronization and causes a dummy character to appear at the coordinate position on the playfield of the game server 2_302 and store the data dedicated to synchronization in the dummy character. The player terminal 2 (PT2) connected to the game server 2_302 receives the data dedicated to synchronization stored in the dummy character from the game server and reproduces the player character 1 (PC1) from the information in the data dedicated to synchronization on the playfield in the player terminal 2 (PT2). The game server 1 (301) connected to the player terminal 1 (PT1) acquires location information of the player character 1 (PC1), which is a character of the player operating the player terminal 1 (PT1), as coordinates (X, Y, Z) and creates data of the player character 1 (PC1). This corresponds to data exclusive for synchronization. The relay server 400 for inter-server communication receives this data exclusive for synchronization. The relay server 400 for inter-server communication transmits the received data exclusive for synchronization to the game server 2_302. The game server 2_302 corresponds to a game server connected to the player terminal 2 (PT2). The game server 2_302 displays the appearance of the player character 2 (PC2) on the player terminal 2 (PT2) at the location where the player character 2 is present. The game server 2_302 further analyzes the data exclusive for synchronization received from the relay server 400 for inter-server communication and creates a dummy character. The created dummy character is displayed at coordinates (X, Y, Z) on the game server 2 (302). The game server 2_302 then transmits the location information of the dummy character to the player terminal 2 (PT2), and the player terminal 2 (PT2) receives the data exclusive for synchronization and reproduces the appearance of the player character 1 (PC1) at the coordinates (X, Y, Z) of the player character 1 (PC1). The player character 1 (PC1) and player character 2 (PC2) are displayed on the screen of the player terminal 2 (PT2). The number of game servers and players is not limited to the number shown in FIG. 2. The relay server 400 for inter-server communication is provided so that each game server only needs to communicate with the relay server 400 for exchanging the data exclusive for synchronization, thus reducing the processing load of communication in comparison to a case of directly communicating with multiple other game servers to exchange the data exclusive for synchronization.

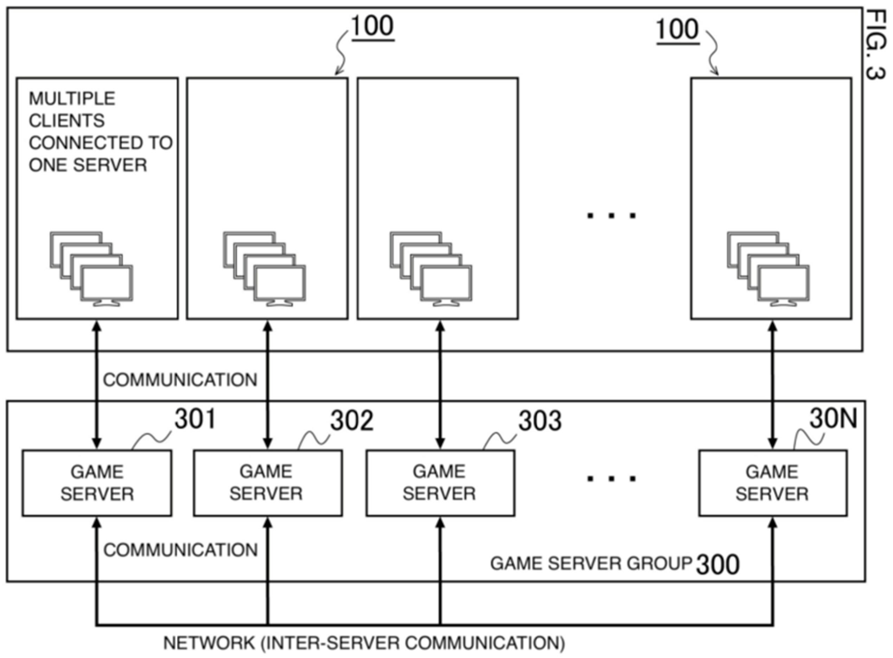

With reference to FIG. 3, a case where a group of the game servers (multiple game servers) 300 in the game system 1 according to the present embodiment are connected via inter-server communication will be described. FIG. 3 shows a block diagram illustrating a state where a group of the game servers 300 in the game system 1 according to the present embodiment are connected via inter-server communication. As shown in FIG. 3, multiple clients (player terminals) are each connected to corresponding one of the multiple game servers 300. The player terminal may correspond to a personal computer (PC), a dedicated game console, or a smartphone. Each of the multiple clients (player terminals) communicates with corresponding one of the game servers 300 (game servers 301 to 30N). This allows the characters of the players in the game to interact with each other. In addition to the characters connected to the same game server, characters connected to different game servers can also interact with each other. The mutual interaction may be directed to, but is not limited to, an action of one player character having some effect on the other player character, for example, damaging the health of the other player character when the action of the one player character corresponds to an attack.

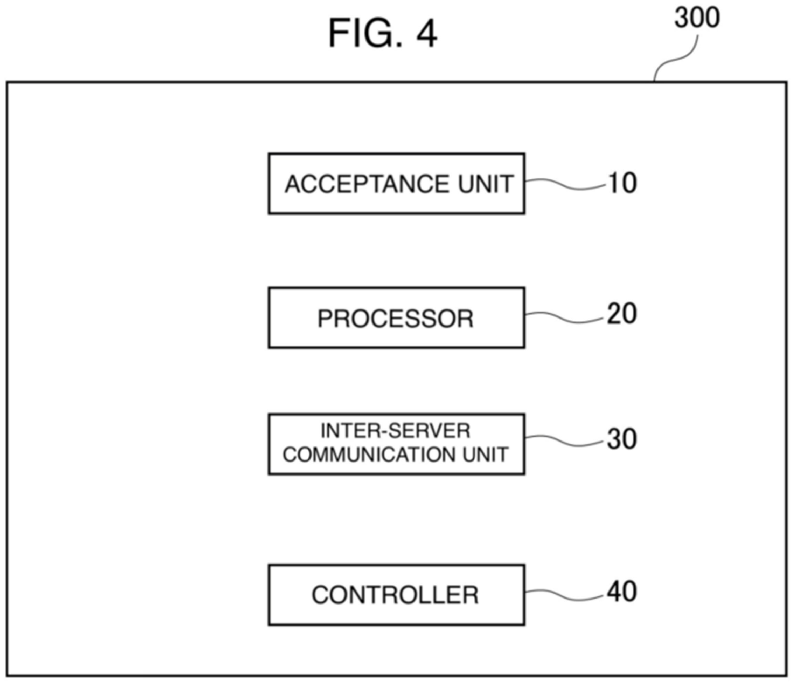

With reference to FIG. 4, the functions of each of the game servers 300 in the game system 1 according to the present embodiment will be described. FIG. 4 shows a block diagram illustrating the functions of each of the game servers 300 in the game system 1 according to the present embodiment. Each game server 300 includes an acceptance unit 10, a processor 20, and a controller 40.

The acceptance unit 10 accepts, from among a plurality of player terminals of a plurality of players, inputs from the player terminal connected to its own server, including operations on a character operated by the player, text or voice of chat, and also inputs other than the operations on the character, such as scene transitions and stage progress. The operations on a character are directed to, for example, actions such as moving the character forward, rearward, to the right, or left, or causing the character to perform some type of action.

The processor 20 performs game processing for the operations. The game processing is directed to moving the character in accordance with the operations accepted by the acceptance unit 10.

The inter-server communication unit 30 synchronizes with other game servers among the game servers 300. The inter-server communication unit 30 receives, for a character of a player connected to another server, location information and movement information of the character in the game area from the other server via the relay server 400. The inter-server communication unit 30 transmits, for a character of a player connected to its own server, location information and movement information of the character in the game area via the relay server 400. The movement information may include, for example, information on attack, defense, movement, and damage.

The controller 40 performs processing of a character of the player connected to its own server, receives information of a character of the player connected to another server, and causes a player terminal connected to its own server to display the character of the player connected to the other server. In addition, with respect to the game, each player terminal is running the basic program of the game, which may be embodied in a form in that the player terminal is communicated information by the controller 40 about where, by whom, and what characters are present and doing, and the game program of the player terminal refers to the communicated information and displays it on the map on the game program.

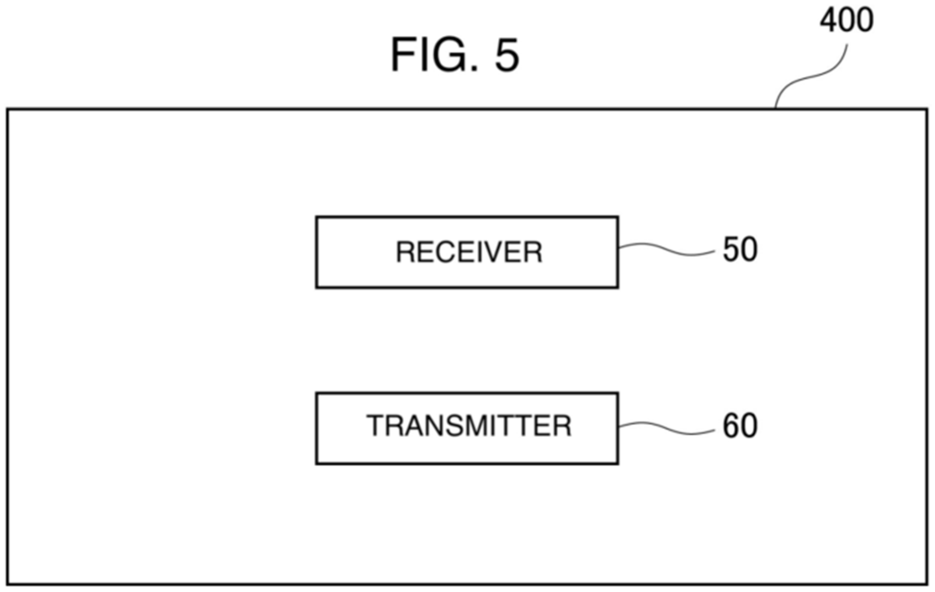

With reference to FIG. 5, the functions of the relay server 400 of the game system 1 according to the present embodiment will be described. FIG. 5 shows a block diagram illustrating the functions of the relay server 400 in the game system 1 according to the present embodiment. The relay server 400 includes a receiver 50 and a transmitter 60. The receiver 50 receives information on the character of the player from the game server 300. The transmitter 60 transmits the information on the character of the player to the other game server 300.

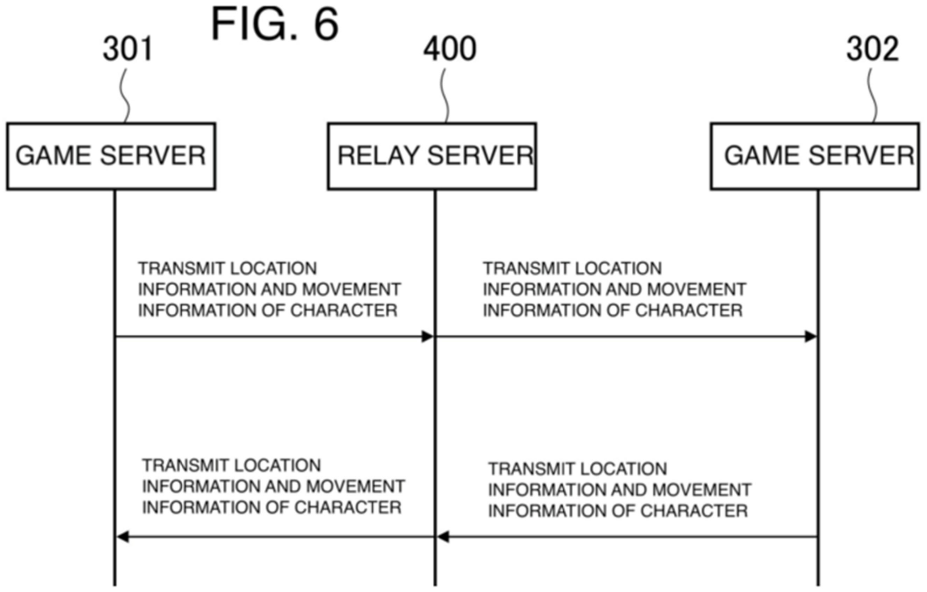

With reference to FIG. 6, the relationship between the game servers 300 and the relay server 400 in the game system 1 according to the present embodiment will be described. FIG. 6 shows a sequence diagram illustrating a relationship among the game servers 300 and the relay server 400 in the game system 1 according to the present embodiment. As shown in FIG. 6, the game server 301 transmits the location information and movement information of the character to the relay server 400, which in turn transmits the location information and movement information of the character to the other game server 302. Meanwhile, the other game server 302 transmits the location information and movement information of the character of the player connected to its own server to the relay server 400, which in turn transmits the location information and movement information of the character of the player to the game server 301. The example shown in FIG. 6 shows a configuration in which the information from the game server 301 is transmitted to the game server 302 via the relay server 400 at the former stage, and the information from the game server 302 is transmitted to the game server 301 via the relay server 400 at the latter stage. In contrast, the relay server 400 may be configured to receive the information from each of the game servers 301 and 302 at the former stage and transmit the information to the other one of the game servers 302 and 301 at the latter stage. The time point of transmission of each of the servers may be scheduled by the relay server 400, or each game server 300 may be configured to transmit sequentially, and the relay server 400 may be configured to transmit to the other game servers 300 as it receives the information.

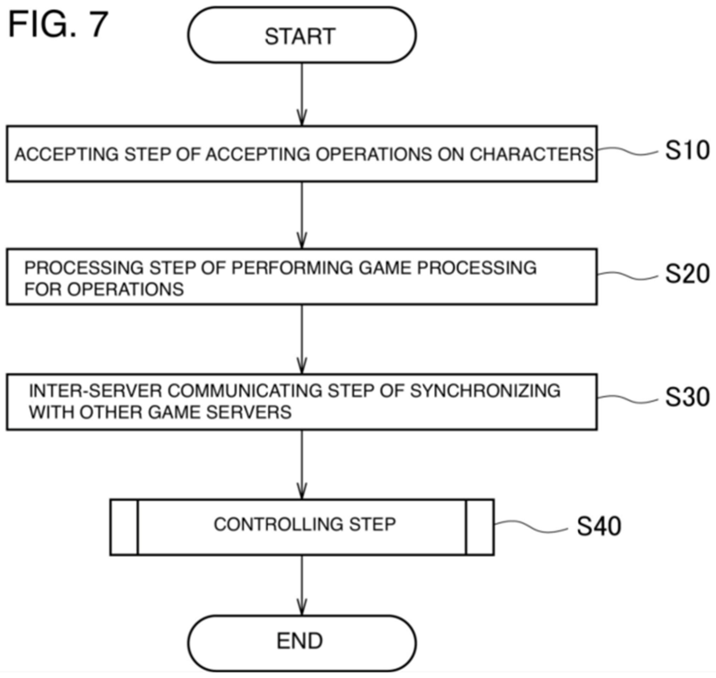

With reference to FIG. 7, the program for data distributed processing according to the present embodiment will be described along with the method for data distributed processing. FIG. 7 shows an example of a flowchart of the method for distributed data processing according to the present embodiment.

The method for distributed data processing is executed by each of the game servers 300 of the game system 1 on the basis of the program for distributed data processing.

The program for distributed data processing includes an accepting step S10 of accepting operations on the characters, a processing step S20 of performing game processing for the operations, an inter-server communicating step S30 of synchronizing with other game servers, and a controlling step S40.

The program for distributed data processing causes each of the game servers 300 in the game system 1 to perform accepting, processing, inter-server communicating, and controlling functions, for example. These functions are performed in the order shown in the flowchart in FIG. 7, but the order may be swapped as appropriate. Since the description of the functions are redundant with respect to the above description of the various functional units of the game system 1, a detailed description of the functions will be omitted.

The accepting function accepts, from among a plurality of player terminals of a plurality of players, operations on a character operated by the player from the player terminal connected to its own server (step S10: accepting step).

The processing function performs game processing for the accepted operations (step S20: processing step).

The inter-server communicating function synchronizes with other game servers among multiple game servers (step S30: inter-server communicating step).

The controlling function performs processing of a character of the player connected to its own server, receives information of a character of the player connected to another server, and causes a player terminal connected to its own server and a player terminal connected to the other server to display the character of the player connected to the other server (step S40: controlling step).

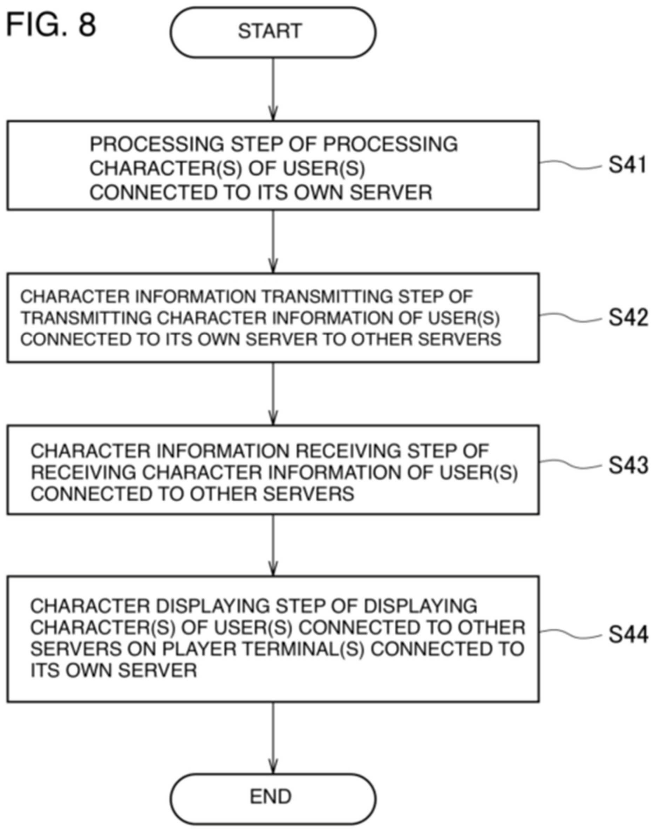

Next, FIG. 8 is referred to, which illustrates the details about the controlling step S40 of the method for distributed data processing according to the present embodiment. The controlling step S40 includes a processing step S41 of processing a character of a user connected to its own server, a character information transmitting step S42 of transmitting information on the character of the user connected to its own server to the other server, a character information receiving step S43 of receiving information on a character of a user connected to the other server, and a character displaying step S44 of displaying the character of the user connected to the other server on the player terminal connected to its own server. In the processing step S41, the controller 40 processes the character of the player connected to its own server. In the character information transmitting step S42, the controller 40 transmits the information of the character of the player connected to its own server to the other servers. In the character information receiving step S43, the controller 40 receives the information of the character of the player connected to the other server. In the character displaying step S44, the controller 40 displays the character of the player connected to the other server on the player terminal connected to its own server.

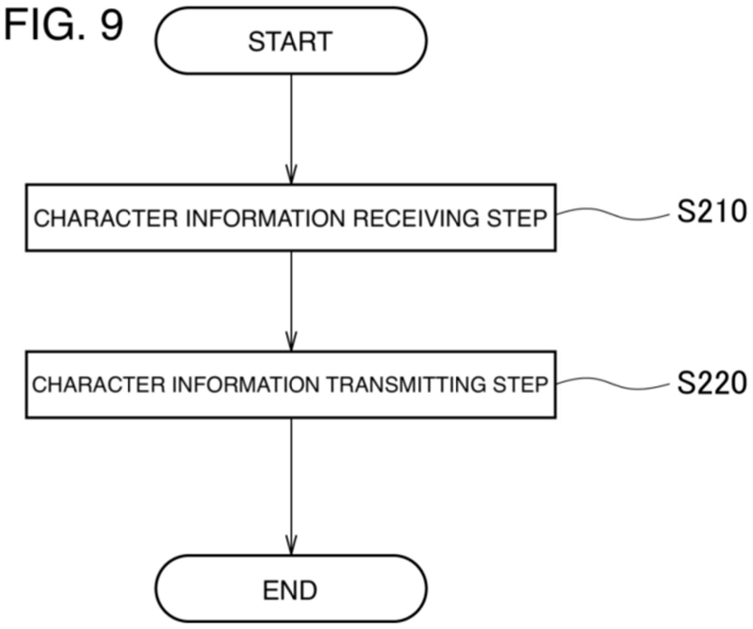

With reference to FIG. 9, the functions of the relay server 400 in the game system 1 according to the present embodiment will be described. FIG. 9 shows an example of a flowchart of the relay server 400 in the game system 1 according to the present embodiment. The relay server 400 receives character information from the game server 300 in the character information receiving step S210 and transmitss the character information received from the game server 300 to the other game server 300 in the character information transmitting step S220.

### About Functions and Circuits

Next, functions and circuitry of the game system 1 described above will be described.

The functional units of each game server 300 may be embodied as functions of a computer arithmetic processor, for example. That is, the game server 300 may be embodied as an accepting function, a processing function, and a controlling function, respectively, by a computer arithmetic processor, for example.

The program for data distributed processing is capable of causing a computer to embody the functions described above. The program for data distributed processing may be recorded on a non-transitory computer-readable storage medium such as a memory, solid state drive, hard disk drive, or optical disk, for example. The storage medium may be rephrased as a non-transitory computer readable medium that stores, for example, a program for data distributed processing. The program for data distributed processing may also be transmitted online.

The computer arithmetic processor, for example, described above may be configured by, for example, an integrated circuit. That is, the game servers 300 of the game system 1 may be embodied as accepting circuits, processing circuits, inter-server communication circuits, and controlling circuits configuring computer arithmetic processors, for example.

The present invention is not limited to the game system 1, method for distributed data processing, and program for distributed data processing according to the embodiment above, but may be implemented by various other variations or applications if they do not depart from the spirit of the present invention recited in the claims. In the embodiment described above, the word "information" is used, but the word "information" can be rephrased as "data" and the word "data" can be rephrased as "information."

### Description of Reference Numerals

1: Game System
10: Acceptance Unit
20: Processor
30: Inter-Server Communication Unit
40: Controller
50: Receiver
60: Transmitter
100: Player Terminal
200: Communication Network
300: Game Server
400: Relay Server for Inter-Server Communication
500: Game Server

## Claims

1. A game system (1) for a multiplayer game in which a considerable number of players participate, the game system (1) comprising:
a plurality of game servers (300) running a server program that performs game processing, wherein
each of the game servers (300) includes:
an acceptance unit (10) that accepts, from among a plurality of player terminals (100) of the players, an operation on a character operated by a player from a player terminal (100) connected to its own server;
a processor (20) that performs game processing for the operation;
an inter-server communication unit (30) that synchronizes with other game servers (300) among the game servers (300); and
a controller (40) that performs processing of a character of the player connected to its own server, receives information of a character of a player connected to another server, and causes a player terminal (100) connected to its own server and a player terminal (100) connected to the other server to display the character of the player connected to the other server.

2. The game system (1) according to claim 1, wherein the inter-server communication unit (30) receives, from the other server, location information and operation information of the character of the player connected to the other server in a game area via a relay server (400), and displays a virtual character that represents the character of the player connected to the other server at a location indicated by the location information.

3. The game system (1) according to claim 2, wherein the inter-server communication unit (30) transmits, with respect to the character of the player connected to its own server, location information and movement information in the game area of the character via the relay server (400).

4. The game system (1) according to claim 2, wherein the movement information includes information on attack, defense, movement, and damage.

5. The game system (1) according to claim 1, further comprising a parent game server (500) that relays information between the game servers (300) as children, manages a group of the game servers (300) as children, and is in charge of game progress management and specific system processing independent of a content of play of each player.

6. A method for distributed data processing for a multiplayer game in which a considerable number of players participate, the method causing a plurality of game servers (300) each running a server program that performs game processing to execute the steps of:
an accepting step of accepting, from among a plurality of player terminals (100) of the players, an operation on a character operated by a player from a player terminal (100) connected to its own server;
a processing step of performing game processing for the operation;
an inter-server communicating step of synchronizing with other game servers (300) among the game servers (300); and
a controlling step of performing processing of a character of the player connected to its own server, receiving information of a character of a player connected to another server, and causing a player terminal (100) connected to its own server and a player terminal (100) connected to the other server to display the character of the player connected to the other server.

7. A program for distributed data processing for a multiplayer game in which a considerable number of players participate, the program causing a plurality of game servers (300) each running a server program that performs game processing to embody:
an accepting function that accepts, from among a plurality of player terminals (100) of the players, an operation on a character operated by a player from a player terminal (100) connected to its own server;
a processing function that performs game processing for the operation;
an inter-server communicating function that synchronizes with other game servers (300) among the game servers (300); and
a controlling function that is in charge of a same game area as a part of a game area, and performs processing of a character of the player connected to its own server, receives information of a character of a player connected to another server, and causes a player terminal (100) connected to its own server and a player terminal (100) connected to the other server to display the character of the player connected to the other server.
